# EUROPEAN PATENT SPECIFICATION

(11) **EP 4 350 846 B1**
(45) Date of publication and mention of the grant of the patent: **25.03.2026**
(21) Application number: 23824168.1
(22) Date of filing: 12.06.2023
(51) Int. Cl.: H01M 10/659, H01M 10/6569, H01M 10/655, H01M 10/613, H01M 10/647, H01M 50/308, H01M 50/581

(54) **ENDOTHERMIC POUCH ASSEMBLY FOR SECONDARY BATTERY**
ENDOTHERME BEUTELANORDNUNG FÜR SEKUNDÄRBATTERIE
ENSEMBLE POCHE ENDOTHERMIQUE POUR BATTERIE SECONDAIRE

(30) Priority: 14.06.2022 KR 20220071856
(43) Date of publication of application: 10.04.2024
(73) Proprietor: LG Energy Solution, Ltd., Seoul 07335 (KR)
(72) Inventor: LEE, Yong Ho, Daejeon 34122 (KR); LEE, Jin Kyu, Daejeon 34122 (KR); HWANG, Won Pill, Daejeon 34122 (KR); YOON, Doo Han, Daejeon 34122 (KR); SON, Chang Keun, Daejeon 34122 (KR); KIM, Sun Jae, Daejeon 34122 (KR)
(74) Representative: Plasseraud IP
(86) International application number: PCT/KR2023/007993
(87) International publication number: WO 2023/243951

(56) References cited:
- JP-A- 2012 221 717
- JP-A- 2012 523 085
- JP-A- 2017 534 531
- KR-A- 20190 082 974
- US-A1- 2010 028 758
- US-A1- 2010 028 758
- US-A1- 2011 070 474
- US-A1- 2012 258 347
- US-A1- 2016 091 141
- US-A1- 2020 287 252

## Description

### [Technical Field]

The present invention relates to an endothermic pouch assembly capable of suppressing a heat propagation phenomenon that causes other nearby secondary cells to continuously overheat in the event of a thermal runaway.

This application claims the benefit of priority based on Korean Patent Applications No. 10-2022-0071856, filed June 14, 2022.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a charge and dischargeable power generator consisting of a laminated structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

In addition, if the secondary batteries are grouped together in the form of modules or packs, a thermal propagation phenomenon occurs in which the thermal runaway of one secondary battery continuously overheats the other secondary batteries in the vicinity. Furthermore, there is a high risk of fire due to flammable gases emitted from overheated secondary batteries and ignition sources such as heated electrodes, so it is necessary to suppress this ignition risk.

### [Prior Art Documents]

Korean Patent Publication No. 2021-0109316 (published on 6 September 2021); US Patent Publication No. 2020-0287252 (published on 10 September 2020); US Patent Publication No. 2010-0028758 (published on 4 February 2010).

### [Description of the Invention]

### [Technical Problem]

The present invention aims to provide an endothermic pouch assembly that can effectively suppress and prevent the phenomenon of heat propagation due to thermal runaway generated in a secondary battery.

In addition, the present invention aims to enable endothermic pouches, which are difficult to maintain their shape, to be placed in the correct position and size between the secondary batteries.

### [Technical Solution]

The present invention relates to an endothermic pouch assembly, which in one example includes an endothermic pouch with liquid-impregnated absorbent material sealed inside, and a pouch cartridge including a pair of rim frames that bind a heat-fusion sealing portion formed along the rim of the endothermic pouch at both sides.

In one exemplary embodiment of the present invention, the heat-fusion sealing portion is provided with a first vulnerable portion having a relatively low bursting strength, and the rim frame is provided with a venting induction hole in a region corresponding to the first vulnerable portion.

In addition, the pouch cartridge may expose a surface of the endothermic pouch in an interior region of the rim frame that binds against the heat-fusion sealing portion.

In addition, the endothermic pouch may be provided with a second vulnerable portion having a relatively low bursting strength on a surface not covered by the pouch cartridge.

For example, the second vulnerable portion may be located directly downstream of the venting induction hole.

In one exemplary embodiment of the present invention, the absorbent material may be a superabsorbent matrix including a superabsorbent polymer (SAP) or superabsorbent fiber (SAF).

In addition, the liquid is water mixed with additives, and the additive may be a substance that lowers the surface tension of water, or is a fire extinguishing agent.

In addition, the liquid impregnated in the superabsorbent matrix absorbs heat, causing a phase change to gas, and when the pressure of the gas exceeds the bursting strength of the first vulnerable portion, the first vulnerable portion fractures, allowing gas inside the endothermic pouch to be inductively ejected through the venting induction hole.

In an example, the bursting strength of the second vulnerable portion may be higher than the bursting strength of the first vulnerable portion.

Meanwhile, in another exemplary embodiment of the present invention, the heat-fusion sealing portion of the endothermic pouch is provided with one or more guide holes, and at least one of the pair of rim frames may be provided with a projection that inserts into the guide holes.

Here, the endothermic pouch and the rim frame may be mutually aligned by an insertion of the projection of the rim frame into guide holes of the endothermic pouch.

In addition, the pair of rim frames are each equipped with hooks, and the pair of rim frames may be bound together by the engagement of corresponding hooks.

In addition, the heat-fusion sealing portion of the endothermic pouch may have an incision formed in a position corresponding to the hook.

### [Advantageous Effects]

According to the endothermic pouch assembly of the present invention with the above configuration, the endothermic pouch can quickly absorb and dissipate heat in environments with high temperature rise, such as rapid charging, to suppress the occurrence of thermal runaway, and maintain performance and life without high temperature rise.

In addition, when a thermal runaway phenomenon occurs in a secondary battery, the liquid impregnated with the absorbent material in the endothermic pouch absorbs heat and vaporizes, and when the vaporized gas rises above a certain pressure, it breaks the endothermic pouch and erupts, thereby greatly reducing the risk of fire by cooling the combustible gas emitted from the overheated battery cell and the ignition source such as heated electrodes and suppressing the flame.

Further, the endothermic pouch assembly of the present invention includes a pouch cartridge that binds against the heat-fusion sealing portion of the endothermic pouch to maintain a specific shape, thereby enabling the endothermic pouch to be positioned between the secondary cells in a precise location and size.

In addition, the venting induction holes provided in the pouch cartridge can accurately induce the emitting direction of the gas generated inside the endothermic pouch, thereby more effectively suppressing the risk of fire.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings, but only by the appended claims.
FIG. 1 is a drawing illustrating an endothermic pouch assembly according to an exemplary embodiment of the present invention.
FIG. 2 is an exploded perspective view of the endothermic pouch assembly of FIG. 1.
FIG. 3 is a top view of the endothermic pouch of FIG. 2.
FIG. 4 is a zoomed-in view of portion "A" of FIG. 1.
FIG. 5 is a drawing illustrating an example of an endothermic pouch assembly disposed between secondary batteries.
FIG. 6 is a drawing illustrating an endothermic pouch assembly according to another exemplary embodiment of the present invention.
FIG. 7 is an exploded perspective view of the endothermic pouch assembly of FIG. 6.
FIG. 8 is a cross-sectional view of portion "B" of FIG. 6.

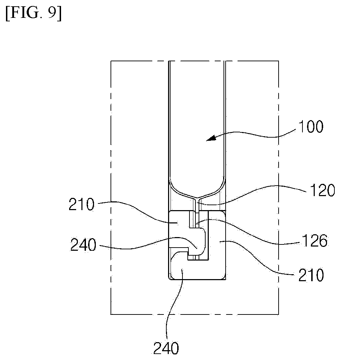

FIG. 9 is a cross-sectional view of portion "C" of FIG. 6.

### [Best Mode for Carrying out the Invention]

The present invention is subject to various modifications and can have many embodiments within the scope of the appended claims, certain of which are described in detail below.

However, this is not intended to limit the invention to any particular embodiment and is to be understood to include all modifications, equivalents, or substitutions that fall within the scope of the claims.

In the present invention, the terms "include" or "have" and the like are intended to designate the presence of the features, numbers, steps, actions, components, parts, or combinations thereof described in the specification and are not to be understood as precluding the possibility of the presence or addition of one or more other features, numbers, steps, actions, components, parts, or combinations thereof.

Also, in the present invention, when a layer, membrane, region, plate, etc. is described as being "on top of" another, this includes not only when it is "directly above" another, but also when there is another part in between. Conversely, when a layer, membrane, area, plate, etc. is described as being "under" another part, this includes not only when it is "directly under" another part, but also when there is another part in between. Also, in the present application, references to being disposed "on top of" may include not only being disposed on top, but also being disposed on the bottom.

The present invention relates to an endothermic pouch assembly, which in one example includes an endothermic pouch and a pouch cartridge that binds to the endothermic pouch.

The endothermic pouch is a sealed container of liquid-impregnated absorbent material that is placed in contact with the surface of a secondary battery so that the liquid inside absorbs heat from the secondary battery.

The pouch cartridge includes a pair of rim frames that bind at both sides a heat-fusion sealing portion formed along the rim of the endothermic pouch. While the nature of the pouch, which is typically made of laminated sheet material, makes it difficult to maintain a specific shape, the pouch cartridge, which is made of metal or synthetic resin material, wraps around the rim of the endothermic pouch, thereby stabilizing the shape of the entire endothermic pouch assembly. Thus, the endothermic pouch assembly of the present invention ensures that the endothermic pouch is disposed between the secondary batteries in the precise position and size.

Further, the endothermic pouch assembly of the present invention is provided with a first vulnerable portion having a relatively low bursting strength on a heat-fusion sealing portion of the endothermic pouch, and a rim frame of the pouch cartridge is provided with a venting induction hole in a region corresponding to the first vulnerable portion.

Therefore, the venting induction holes provided in the pouch cartridge can accurately guide the emitting direction of the gas generated inside the endothermic pouch, thereby avoiding high-heat gases or parts that are vulnerable to flame, and more effectively suppressing the risk of fire.

### [Mode for Carrying Out the invention]

Hereinafter, specific embodiments of the present invention will be described in detail with reference to the accompanying drawings. For reference, the directions of front, back, up, down, left, and right used in the following description to designate relative positions are intended to aid in the understanding of the invention, and refer to the directions shown in the drawings unless otherwise specified.

### (First Embodiment)

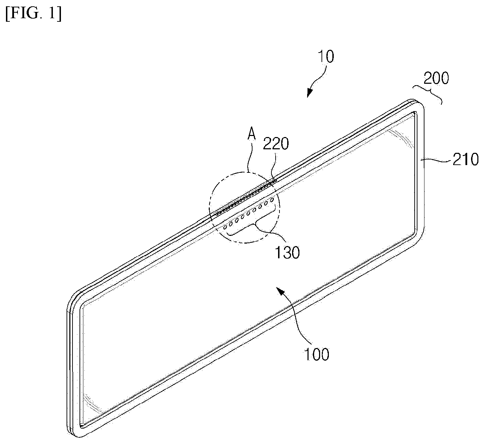

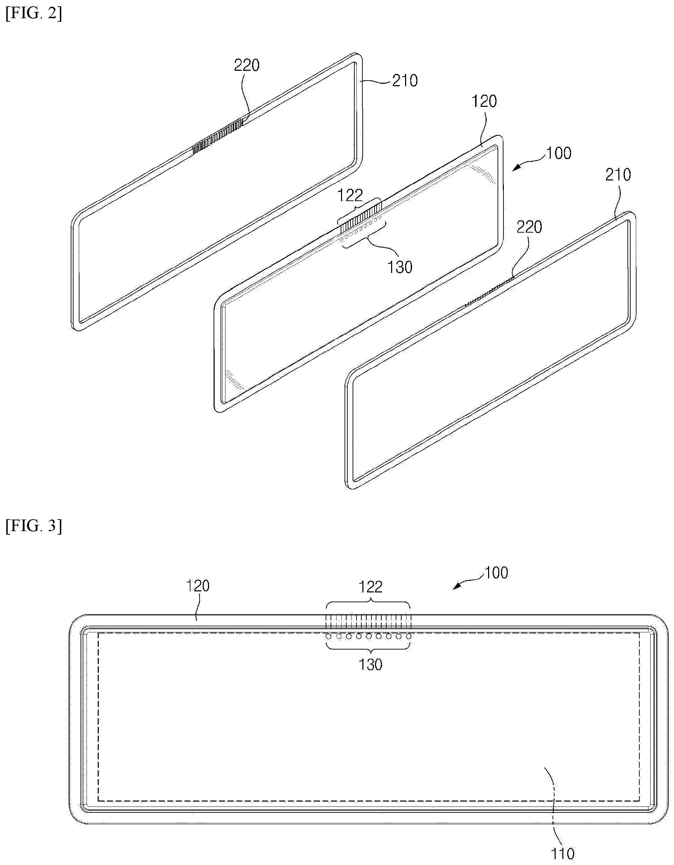

FIG. 1 is a drawing illustrating an endothermic pouch assembly 10 according to a first embodiment of the present invention, and FIG. 2 is an exploded perspective view of the endothermic pouch assembly 10 of FIG. 1. The endothermic pouch assembly 10 according to a first embodiment of the present invention will be described in detail with reference to the accompanying drawings.

The endothermic pouch assembly 10 of the present invention refers to an assembly where an endothermic pouch 100 and a pouch cartridge 200 are coupled. The endothermic pouch 100 may be manufactured using a flexible laminated sheet, within which a liquid-impregnated absorbent material 110 is sealedly stored.

The pouch cartridge 200 includes a pair of rim frames 210 that bind the heat-fusion sealing portion 120 formed along the rim of the endothermic pouch 100 on both sides. The rim frames 210 may be made of a metal, such as aluminum, or a synthetic resin, such as polycarbonate.

While it is difficult for the endothermic pouch 100 to remain exactly the same shape due to the flexibility of the packaging material, the laminated sheet, the overall shape and size of the endothermic pouch assembly 10 is fairly uniform and structured as the structural element, the rim frame 210, secures the rim of the endothermic pouch 100.

Thus, the endothermic pouch assembly 10 of the present invention ensures that the endothermic pouch 100 is positioned in the precise location and size between the secondary batteries 1000, which in turn facilitates the management of manufacturing tolerances or deviations when configuring a battery module or pack incorporating a plurality of secondary batteries 1000 and the endothermic pouch 100.

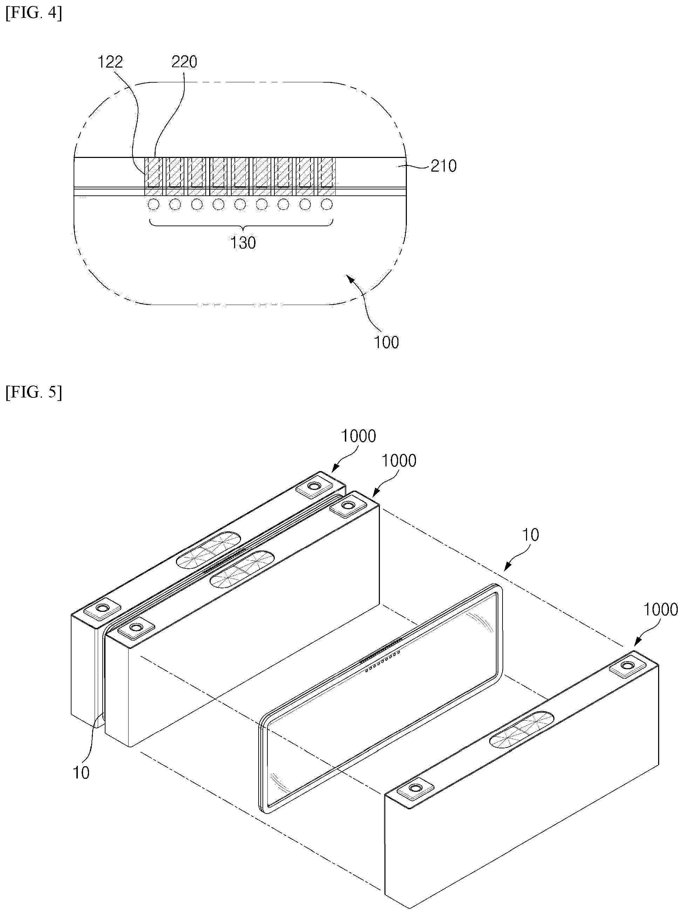

In addition, the pouch cartridge 200 exposes a surface of the endothermic pouch 100 at an inner region of the rim frame 210 that binds the endothermic pouch 100 against the heat-fusion sealing portion 120 of the endothermic pouch 100. In other words, the inner region of the rim frame 210 comprises an incised space. This is to maximize the amount of endothermic contact surface that is in direct contact with the surface of the secondary battery 1000 by exposing most of the surface of the endothermic pouch 100, as shown in FIG. 5.

FIG. 3 is a top view of the endothermic pouch 100 of FIG. 2. Referring to FIGS. 2 and 3, the heat-fusion sealing portion 120 of the endothermic pouch 100 is provided with a first vulnerable portion 122 having a relatively low bursting strength. Correspondingly, as shown in FIGS. 2 and 4, the rim frame 210 is provided with a venting induction hole 220 in a region corresponding to the first vulnerable portion 122, and the venting induction hole 220 connects the inner surface of the rim frame 210 to the exterior.

The liquid impregnated in large quantities in the absorbent material 110 housed in the endothermic pouch 100 absorbs the heat generated by the secondary battery 1000 and vaporizes when its temperature exceeds its boiling point. Due to the volume increase by the phase change from liquid to gas, the endothermic pouch 100 sealing the absorbent material 110 is subjected to pressure. And, the endothermic pouch 100 has a first vulnerable portion 122 that preferentially fractures when the liquid impregnated in the absorbent material 110 vaporizes, which in turn increases the internal pressure.

The body of the endothermic pouch 100 may be manufactured using a flexible laminated sheet, and the laminated sheet may be a three or more layers structure including an aluminum thin film layer, an inner resin layer formed on an inner side of the aluminum thin film layer, and an outer resin layer formed on an outer side of the aluminum thin film layer. For example, the inner resin layer may be casted polypropylene (CPP) or polypropylene (PP), and the outer resin layer may be polyethylene terephthalate (PET) or nylon.

The first vulnerable portion 122 of the endothermic pouch 100 is configured to preferentially fracture by an increase in internal pressure due to vaporization of the liquid by locally reducing the sealing strength of the heat-fusion sealing portion 120. That is, the first vulnerable portion 122 can be formed in a manner that makes the heat/fusion strength of the heat-fusion sealing portion 120 lower than the surrounding. For example, the first vulnerable portion 122 may be formed by making it less thick than the surrounding area, by forming a notch to reduce the strength, or by locally removing an aluminum thin film layer that maintains durability.

As such, by providing the first vulnerable portion 122 in the endothermic pouch 100, when the secondary battery 1000 overheats due to a thermal runaway phenomenon, the liquid impregnated with the absorbent material 110 in the endothermic pouch 100 absorbs heat and vaporizes, and when the internal pressure of the vaporized gas exceeds a certain pressure, that is, the bursting strength of the first vulnerable portion 122, the first vulnerable portion 122 fractures and ejects gas. The gas ejected from the endothermic pouch 100 greatly reduces the risk of fire by cooling the flammable gas emitted from the overheated secondary battery 1000 and the ignition source such as the heated electrodes, and by suppressing the flame.

And, as shown in FIG. 4, the rim frame 210 is provided with a venting induction hole 220 in a region corresponding to the first vulnerable portion 122. Therefore, the gas ejected by the fracture of the first vulnerable portion 122 is discharged to the outside through the venting induction hole 220. That is, the gas from the endothermic pouch 100 is induced to be ejected in a set direction by the venting induction hole 220.

This induction venting is very useful and important for the safety of the battery module or pack. The battery module or pack, as well as the secondary battery 1000 itself, contains electrical components that are vulnerable to heat, flame, moisture, etc. In addition, in vehicles, devices, equipment, etc. in which the battery module/pack is mounted, it is necessary to specify the venting direction to minimize safety accidents such as personal injury. Therefore, the endothermic pouch assembly 10 of the present invention can realize optimal induction venting by appropriately designing the location of the first vulnerable portion 122 and the venting induction hole 220, thereby improving the safety of the secondary battery 1000 and the battery module/pack.

Additionally, the endothermic pouch 100 may be further provided with a second vulnerable portion 130 having a relatively low bursting strength on a surface that is not obscured by the pouch cartridge 200. For example, the second vulnerable portion 130 may be located directly downstream of the venting induction hole 220 and arranged to eject gas proximate to the direction of the induced venting.

The second vulnerable portion 130 may be provided to provide an additional gas outlet, for example, in the event that the ejection of gas through the first vulnerable portion 122 and the venting induction hole 220 is insufficient, or as a safety outlet in the event that the internal pressure of the endothermic pouch 100 rises above a predetermined level. In this regard, the bursting strength of the second vulnerable portion 130 may be set higher than the bursting strength of the first vulnerable portion 122 such that the second vulnerable portion 130 bursts after the first vulnerable portion 122.

Meanwhile, in the first embodiment of the present invention, the absorbent material 110 may be an absorbent material 110 including a superabsorbent matrix, such as a superabsorbent polymer (SAP) or a superabsorbent fiber (SAF). Superabsorbent matrices can be porous or fibrous, capable of absorbing large amounts of liquid by exhibiting capillarity, while superabsorbent fibers can be manufactured in the form of fibers, such as nonwovens, by processing superabsorbent resins.

The specific types of superabsorbent resins and superabsorbent fibers made therefrom are not particularly limited in the present invention, but can be used without restriction as long as they have a high absorption capacity for fluids, in particular water. Examples of superabsorbent resins used in the present invention include one or more selected from the group consisting of polyacrylic acid, polyacrylate, polyacrylate graft polymers, starch, crosslinked carboxymethylated cellulose, acrylic acid copolymers, hydrolyzed starch-acrylonitrile graft copolymers, and starch-acrylic acid graft copolymers, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinyl sulfonic acid, polyvinyl phosphonic acid, polyvinyl phosphate, polyvinyl sulfuric acid, sulfonated polystyrene, polyvinylamine, polydialkylaminoalkyl (meth)acrylamide, polyethyleneimine, polyallylamine, polyallylguanidine, polydimethyldialylammonium hydroxide, quaternized polystyrene derivatives, guanidine-modified polystyrene, quaternized poly(meth)acrylamide, polyvinylguanidine, and mixtures thereof, and preferably one or more selected from the group consisting of crosslinked polyacrylic acid salts, crosslinked polyacrylic acid, and crosslinked acrylic acid copolymers, but are not limited thereto.

The type of acrylic acid copolymer used as a superabsorbent resin in the present invention is not particularly limited, but may preferably be a copolymer including one or more co-monomers selected from the group consisting of acrylic acid monomer and maleic acid, itaconic acid, acrylamide, 2-acrylamide-2-methylpropanesulfonic acid, 2-(meth)acryloylethanesulfonic acid, 2-hydroxyethyl (meth)acrylate, and styrenesulfonic acid.

In the present invention, the superabsorbent resin may have an absorption capacity for water of 10 g/g to 500 g/g, preferably 50 g/g to 200 g/g, but is not limited thereto. That is, it may absorb 10 g to 500 g, preferably 50 g to 200 g, of water per 1 g of the superabsorbent resin.

In the present invention, a higher amount of absorption of water by the superabsorbent resin can improve the duration of the cooling effect, but when the amount exceeds 500 g/g, the fluidity of the superabsorbent resin increases and it is difficult to maintain its shape, so that effective cooling cannot be exerted, and when the amount is less than 10 g/g, the duration of the cooling effect may be too short to be effective.

In addition, in the first embodiment of the present invention, the liquid impregnating the absorbent material 110 may be water. Water has the largest specific and latent heat among any readily available liquid. Therefore, water impregnated in the absorbent material 110 is suitable for application in the endothermic pouch 100 of the present invention because of the large amount of heat it absorbs during its phase change to gas, beginning even before it is vaporized.

Additionally, the water impregnated in the absorbent material 110 may be mixed with additives that may enhance fire extinguishing capabilities. For example, the additive mixed into the water may be a substance that reduces the surface tension of the water, or may be an extinguishing agent. Substances that reduce the surface tension of water include wetting agents and surfactants, and when the surface tension of water is reduced, the penetration effect of water increases, which enhances the extinguishing effect on ignition sources such as heated electrodes and ignition particles.

Extinguishing agents are agents that extinguish fire by themselves and can include a variety of commercially available powders and liquid extinguishing liquids. For example, an extinguishing agent with the trade name F-500 EA (manufacturer HAZARD CONTROL TECHNOLOGIES, INC.) may be added to water.

### (Second Embodiment)

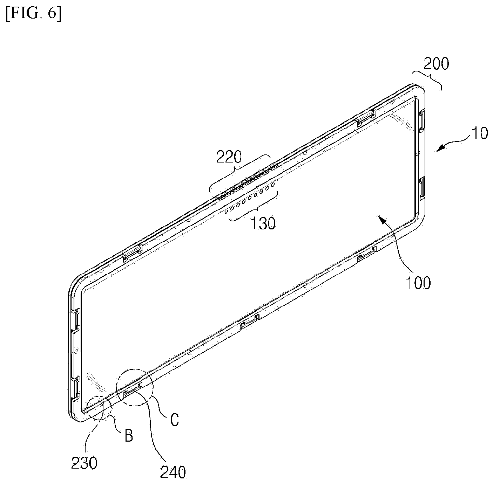

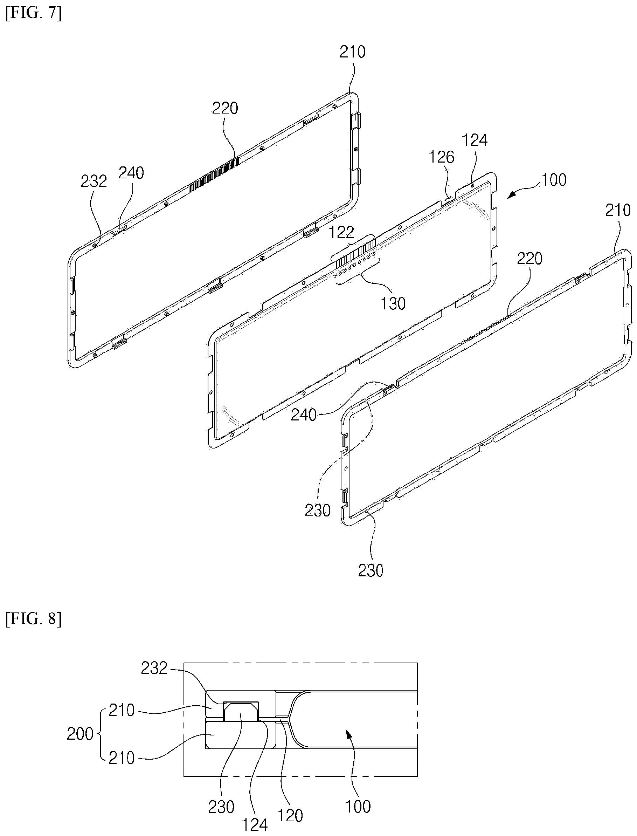

FIG. 6 is a drawing of an endothermic pouch assembly 10 according to a second embodiment of the present invention, and FIG. 7 is an exploded perspective view of the endothermic pouch assembly 10 of FIG. 6, wherein the second embodiment of the present invention further includes a structure that improves assembly or manufacturing efficiency between the endothermic pouch 100 and the pouch cartridge 200.

Referring to FIGS. 6 and 7, in the second embodiment of the present invention, the heat-fusion sealing portion 120 of the endothermic pouch 100 is provided with one or more guide holes 124, and at least one of the pair of rim frames 210 is provided with a projection 230 that inserts into the guide holes 124.

Accordingly, when the endothermic pouch 100 and the rim frame 210 are mutually coupled, the projection 230 of the rim frame 210 may be inserted into the guide holes 124 of the endothermic pouch 100 so that the endothermic pouch 100 and the rim frame 210 are accurately aligned with each other.

Furthermore, in the first embodiment, the heat-fusion sealing portion 120 of the endothermic pouch 100 is compressed and fixed by a pair of mutually bonded rim frames 210, but in the second embodiment, the projection 230 of the rim frames 210 penetrate the guide holes 124 of the endothermic pouch 100, thereby improving the fixing power of the endothermic pouch 100. In other words, even when an external force is applied directly to the endothermic pouch 100 through the exposed surface of the rim frame 210, the projection 230 penetrates and supports the heat-fusion sealing portion 120, so that the endothermic pouch 100 does not detach from the rim frame 210 in response to an external force within the bursting strength of the heat-fusion sealing portion 120.

FIG. 8 is a cross-sectional view of portion "B" of FIG. 6, wherein the exemplary embodiment of FIG. 8 has a projection 230 formed on one side of a pair of rim frames 210 and a recess 232 on the other side. The projection 230 is inserted into the recess 232 after passing through the guide hole 124 of the heat-fusion sealing portion 120 to more reliably align and support the endothermic pouch 100.

In addition, turning to FIGS. 6 and 7, each of the pair of rim frames 210 is provided with a hook 240. The pair of hooks 240 have hook-shaped protruding ends that elastically deform to engage each other. Therefore, when the pair of rim frames 210 facing each other with the endothermic pouch 100 between them are pressed with a predetermined force, the corresponding hooks 240 engage with each other and the pair of rim frames 210 are bound.

Thus, in the second embodiment, the pouch cartridge 200 can be manufactured in a one-step manner through hook joining without the use of heat-fusion or bonding to join the pair of rim frames 210. However, even when applying the hook structure, it is of course possible to use a combination of heat-fusion or bonding to provide a more robust bonding of the rim frames 210.

Furthermore, an incision 126 is formed on the heat-fusion sealing portion 120 of the endothermic pouch 100 at a location corresponding to the hooks 240 of the rim frame 210. The incisions 126 are to provide a space for the pair of hooks 240 to approach and engage each other, and the formation of the incisions 126 facilitates the engagement of the hooks 240.

The present invention has been described above in more detail through the drawings and embodiments. However, the configurations described in the drawings or the embodiments in the specification are merely embodiments of the present invention and do not represent all the technical ideas of the present invention as defined by the appended claims.

### [Reference numerals]

10: ENDOTHERMIC POUCH ASSEMBLY
100: ENDOTHERMIC POUCH
110: ABSORBENT MATERIAL
120: HEAT-FUSION SEALING PORTION
122: FIRST VULNERABLE PORTION
124: GUIDE HOLE
126: INCISION
130: SECOND VULNERABLE PORTION
200: POUCH CARTRIDGE
210: RIM FRAME
220: VENTING INDUCTION HOLE
230: PROJECTION
232: RECESS
240: HOOK
1000: SECONDARY BATTERY

## Claims

1. An endothermic pouch assembly (10) **characterised in that** it comprises:
an endothermic pouch (100) with liquid-impregnated absorbent material (110) sealed inside and a heat-fusion sealing portion (120) formed along a rim of the endothermic pouch; and
a pouch cartridge (200) comprising a pair of rim frames (210) that bind the heat-fusion sealing portion (120) of the endothermic pouch at opposite sides of the endothermic pouch (100).

2. The endothermic pouch assembly (10) of claim 1, wherein
the heat-fusion sealing portion (120) is provided with a first vulnerable portion (122) having a lower bursting strength than the surrounding, and
wherein the pouch cartridge (200) is provided with a venting induction hole (220) in a region corresponding to the first vulnerable portion (122).

3. The endothermic pouch assembly (10) of claim 2, wherein
the pouch cartridge (200) exposes a surface of the endothermic pouch in an interior region of the pouch cartridge (200).

4. The endothermic pouch assembly (10) of claim 3, whereinthe endothermic pouch (100) is provided with a second vulnerable portion (130) having a relatively low bursting strength on a surface not covered by the pouch cartridge (200).

5. The endothermic pouch assembly (10) of claim 4, whereinthe second vulnerable portion (130) is located directly downstream of the venting induction hole (220).

6. The endothermic pouch assembly (10) of claim 1, whereinthe absorbent material (110) is a superabsorbent matrix.

7. The endothermic pouch assembly (10) of claim 6, whereinthe superabsorbent matrix comprises a superabsorbent polymer (SAP) or superabsorbent fiber (SAF).

8. The endothermic pouch assembly (10) of claim 7, wherein the liquid is water mixed with additives, and
wherein the additive is a substance that lowers the surface tension of water, or is a fire extinguishing agent.

9. The endothermic pouch assembly (10) of claim 7, whereinthe liquid impregnated in the superabsorbent matrix absorbs heat, causing a phase change to gas, and
wherein when the pressure of the gas exceeds the bursting strength of the first vulnerable portion (122), the first vulnerable portion fractures, allowing gas inside the endothermic pouch (100) to be inductively ejected through the venting induction hole (220).

10. The endothermic pouch assembly (10) of claim 2, whereinthe endothermic pouch (100) is provided with a second vulnerable portion (130) having a relatively low bursting strength on a surface not covered by the pouch cartridge (200), and
wherein the bursting strength of the second vulnerable portion (130) is higher than a bursting strength of the first vulnerable portion (122).

11. The endothermic pouch assembly (10) of claim 1, whereinthe heat-fusion sealing portion (120) of the endothermic pouch (100) is provided with at least one guide holes (124),
wherein at least one of the pair of rim frames (210) is provided with a projection that inserts into the at least one guide hole (124).

12. The endothermic pouch assembly (10) of claim 11, wherein the endothermic pouch (100) and the rim frame (210) are mutually aligned by an insertion of the projection of the rim frame (210) into the at least one guide hole (124) of the endothermic pouch (100).

13. The endothermic pouch assembly (10) of claim 11, whereineach of the pair of rim frames (210) is provided with a hook (240), and
wherein the pair of rim frames (210) are bound together by the engagement of the pair of hooks (240).

14. The endothermic pouch assembly (10) of claim 13, whereinthe heat-fusion sealing portion (120) of the endothermic pouch (100) has an incision (126) formed in a position corresponding to the pair of hooks (240).

## Patentansprüche

1. Endotherme Beutelanordnung (10), **dadurch gekennzeichnet, dass** sie umfasst:
einen endothermen Beutel (100) mit einem flüssigkeitsimprägnierten Absorptionsmaterial (110), welches innen abgedichtet ist und einem wärmeverschmolzenen Dichtungsabschnitt (120), welcher entlang eines Randes des endothermen Beutels gebildet ist; und
einen Beuteleinsatz (200), welcher ein Paar von Randrahmen (210) umfasst, welche den wärmeverschmolzenen Dichtungsabschnitt (120) des endothermen Beutels an entgegengesetzten Seiten des endothermen Beutels (100) binden.

2. Endotherme Beutelanordnung (10) nach Anspruch 1, wobei der wärmeverschmolzene Dichtungsabschnitt (120) mit einem ersten Schwachstellenabschnitt (122) bereitgestellt ist, welcher eine geringere Berstfestigkeit als die Umgebung aufweist, und
wobei der Beuteleinsatz (200) mit einem Entlüftungsinduktionsloch (220) in einem Bereich bereitgestellt ist, welcher dem ersten Schwachstellenabschnitt (122) entspricht.

3. Endotherme Beutelanordnung (10) nach Anspruch 2, wobei
der Beuteleinsatz (200) eine Fläche des endothermen Beutels in einem Innenbereich des Beuteleinsatzes (200) freilegt.

4. Endotherme Beutelanordnung (10) nach Anspruch 3, wobei der endotherme Beutel (100) mit einem zweiten Schwachstellenabschnitt (130) bereitgestellt ist, welcher eine relativ geringe Berstfestigkeit an einer Fläche aufweist, welche nicht von dem Beuteleinsatz (200) bedeckt ist.

5. Endotherme Beutelanordnung (10) nach Anspruch 4, wobei der zweite Schwachstellenabschnitt (130) unmittelbar stromabwärts des Entlüftungsinduktionslochs (220) angeordnet ist.

6. Endotherme Beutelanordnung (10) nach Anspruch 1, wobei das Absorptionsmaterial (110) eine superabsorbierende Matrix ist.

7. Endotherme Beutelanordnung (10) nach Anspruch 6, wobei die superabsorbierende Matrix ein superabsorbierendes Polymer (SAP) oder eine superabsorbierende Faser (SAF) umfasst.

8. Endotherme Beutelanordnung (10) nach Anspruch 7, wobei die Flüssigkeit Wasser ist, welches mit Additiven gemischt ist, und
wobei das Additiv eine Substanz ist, welche die Oberflächenspannung von Wasser senkt, oder ein Feuerlöschmittel ist.

9. Endotherme Beutelanordnung (10) nach Anspruch 7, wobei die Flüssigkeit, welche in der superabsorbierenden Matrix imprägniert ist, Wärme absorbiert, wodurch ein Phasenübergang zu Gas verursacht wird, und
wobei, wenn der Druck des Gases die Berstfestigkeit des ersten Schwachstellenabschnitts (122) überschreitet, der erste Schwachstellenabschnitt bricht, wodurch Gas innerhalb des endothermen Beutels (100) induktiv durch das Entlüftungsinduktionsloch (220) ausgestoßen wird.

10. Endotherme Beutelanordnung (10) nach Anspruch 2, wobei der endotherme Beutel (100) mit einem zweiten Schwachstellenabschnitt (130) bereitgestellt ist, welcher eine relativ geringe Berstfestigkeit an einer Fläche aufweist, welche nicht von dem Beuteleinsatz (200) bedeckt ist, und
wobei die Berstfestigkeit des zweiten Schwachstellenabschnitts (130) höher ist als die Berstfestigkeit des ersten Schwachstellenabschnitts (122).

11. Endotherme Beutelanordnung (10) nach Anspruch 1, wobei der wärmeverschmolzene Dichtungsabschnitt (120) des endothermen Beutels (100) mit wenigstens einem Führungsloch (124) bereitgestellt ist,
wobei wenigstens einer des Paares der Randrahmen (210) mit einem Vorsprung bereitgestellt ist, welcher in das wenigstens eine Führungsloch (124) eingesetzt ist.

12. Endotherme Beutelanordnung (10) nach Anspruch 11, wobei der endotherme Beutel (100) und der Randrahmen (210) durch ein Einsetzen des Vorsprungs des Randrahmens (210) in das wenigstens eine Führungsloch (124) des endothermen Beutels (100) gemeinsam ausgerichtet sind.

13. Endotherme Beutelanordnung (10) nach Anspruch 11, wobei jeder des Paars von Randrahmen (210) mit einem Haken (240) bereitgestellt ist, und wobei das Paar von Randrahmen (210) durch das Eingreifen des Paars von Haken (240) miteinander verbunden ist.

14. Endotherme Beutelanordnung (10) nach Anspruch 13, wobei der wärmeverschmolzene Dichtungsabschnitt (120) des endothermen Beutels (100) einen Einschnitt (126) aufweist, welcher in einer Position gebildet ist, welche dem Paar von Haken (240) entspricht.

## Revendications

1. Ensemble poche endothermique (10) **caractérisé en ce qu'**il comprend :
une poche endothermique (100) avec un matériau absorbant (110) imprégné de liquide scellé à l'intérieur et une partie de scellement par fusion thermique (120) formée le long d'un bord de la poche endothermique ; et
une cartouche de poche (200) comprenant une paire de cadres de bord (210) qui relient la partie de scellement par fusion thermique (120) de la poche endothermique sur des côtés opposés de la poche endothermique (100).

2. Ensemble poche endothermique (10) selon la revendication 1, dans lequel
la partie de scellement par fusion thermique (120) est pourvue d'une première partie vulnérable (122) présentant une résistance à l'éclatement inférieure à celle de l'environnement, et
dans lequel la cartouche de poche (200) est pourvue d'un trou d'induction de ventilation (220) dans une région correspondant à la première partie vulnérable (122).

3. Ensemble poche endothermique (10) selon la revendication 2, dans lequel
la cartouche de poche (200) expose une surface de la poche endothermique dans une région intérieure de la cartouche de poche (200).

4. Ensemble poche endothermique (10) selon la revendication 3, dans lequel la poche endothermique (100) est pourvue d'une seconde partie vulnérable (130) présentant une résistance à l'éclatement relativement faible sur une surface non couverte par la cartouche de poche (200).

5. Ensemble poche endothermique (10) selon la revendication 4, dans lequel la seconde partie vulnérable (130) est située directement en aval du trou d'induction de ventilation (220).

6. Ensemble poche endothermique (10) selon la revendication 1, dans lequel le matériau absorbant (110) est une matrice superabsorbante.

7. Ensemble poche endothermique (10) selon la revendication 6, dans lequel la matrice superabsorbante comprend un polymère superabsorbant (SAP) ou une fibre superabsorbante (SAF).

8. Ensemble poche endothermique (10) selon la revendication 7, dans lequel le liquide est de l'eau mélangée à des additifs, et
dans lequel l'additif est une substance qui baisse la tension superficielle de l'eau, ou est un agent extincteur contre l'incendie.

9. Ensemble poche endothermique (10) selon la revendication 7, dans lequel le liquide imprégné dans la matrice superabsorbante absorbe la chaleur, provoquant un changement de phase en gaz, et
dans lequel lorsque la pression du gaz dépasse la résistance à l'éclatement de la première partie vulnérable (122), la première partie vulnérable se fracture, permettant au gaz à l'intérieur de la poche endothermique (100) d'être éjecté par induction à travers le trou d'induction de ventilation (220).

10. Ensemble poche endothermique (10) selon la revendication 2, dans lequel la poche endothermique (100) est pourvue d'une seconde partie vulnérable (130) présentant une résistance à l'éclatement relativement faible sur une surface non couverte par la cartouche de poche (200), et
dans lequel la résistance à l'éclatement de la seconde partie vulnérable (130) est supérieure à une résistance à l'éclatement de la première partie vulnérable (122).

11. Ensemble poche endothermique (10) selon la revendication 1, dans lequel la partie de scellement par fusion thermique (120) de la poche endothermique (100) est pourvue d'au moins un trou de guidage (124),
dans lequel au moins un de la paire de cadres de bord (210) est pourvu d'une saillie qui s'insère dans l'au moins un trou de guidage (124).

12. Ensemble poche endothermique (10) selon la revendication 11, dans lequel la poche endothermique (100) et le cadre de bord (210) sont alignés réciproquement par une insertion de la saillie du cadre de bord (210) dans l'au moins un trou de guidage (124) de la poche endothermique (100).

13. Ensemble poche endothermique (10) selon la revendication 11, dans lequel chacun de la paire de cadres de bord (210) est pourvu d'un crochet (240), et
dans lequel la paire de cadres de bord (210) sont liés ensemble par la mise en prise de la paire de crochets (240).

14. Ensemble poche endothermique (10) selon la revendication 13, dans lequel la partie de scellement par fusion thermique (120) de la poche endothermique (100) présente une incision (126) formée dans une position correspondant à la paire de crochets (240).
